# EUROPEAN PATENT APPLICATION

(11) **EP 4 202 529 A1**
(43) Date of publication of application: **28.06.2023**
(21) Application number: 21216736.5
(22) Date of filing: 22.12.2021
(51) Int. Cl.: G02B 26/08

(54) **OPTICAL DEFLECTOR AND METHOD OPERATING AN OPTICAL DEFLECTOR**

(71) Applicant: Silicon Austria Labs GmbH, 8010 Graz (AT)
(72) Inventor: Piot, Adrien, 9500 Villach (AT); Pribosek, Jaka, 9500 Villach (AT); Tortschanoff, Andreas, 9500 Villach (AT); Schicker, Johannes, 9623 St. Stefan an der Gail (AT); Moridi, Mohssen, 9500 Villach (AT)
(74) Representative: Wirnsberger & Lerchbaum Patentanwälte OG

(57) **Abstract**

The invention concerns an optical deflector (1), comprising a mirror (2), a first holder (3) and a second holder (4), the mirror (2) being pivotally connected to the first holder (3) about a first axis (A) and the first holder (3) being pivotally connected to the second holder (4) about a second axis (B), wherein the first axis and the second axis being aligned at an angle, in particular perpendicularly to one another; wherein piezoelectric actuators (6) are mechanically coupled to the second holder (4), wherein upon application of a driving voltage to the piezoelectric actuators (6) two orthogonal resonating oscillation modes are excitable, one of the resonating oscillation modes corresponding to a pivoting of the mirror (2) about the first axis (A) and the other one corresponding to a pivoting of the mirror (2) about the second axis (B).

Furthermore, the invention concerns a method operating an optical deflector (1).

## Description

The invention concerns an optical deflector, comprising a mirror, a first holder and a second holder, the mirror being pivotally connected to the first holder about a first axis and the first holder being pivotally connected to the second holder about a second axis, wherein the first axis and the second axis being aligned at an angle, in particular perpendicularly to one another.

Furthermore, the invention concerns a method of operating an optical deflector.

Microscanners or optical deflectors are known from the prior art. These are usually classified as micro-opto-electro-mechanical systems (MOEMS). Such MOEMS scanning mirrors usually have a movable mirror and an actuator system to pivot the mirror with the actuator system around one or two axes. In this way, for example, a controlled deflection of a laser beam incident on the mirror is made possible. To perform a laser beam deflection in two dimensions, systems are known which are based on deflecting a laser beam in a controlled manner successively with two mirrors, each of which can be pivoted about an axis, the axes usually being aligned at an angle to each other. The mirrors can be driven, for example, magnetically, electrostatically or piezoelectrically.

It has proved practical to use piezoelectric actuators to move a mirror by means of oscillation excitation. Oscillation excitation of the mirror movement can be quasi-static, in which case an oscillation frequency is usually far below a resonance frequency, or resonant, in which case an oscillation frequency is close to the resonance frequency.

Mirror control by resonant excitation based on piezoelectric drive is known for mirror motion in one dimension.

Document US 10,281,716 B2 discloses a mirror pivotally disposed within a frame by means of torsion bars, the frame having a plurality of piezoelectric actuators to control pivoting of the mirror by means of resonant excitation.

It is an object of the invention to provide an optical deflector that efficiently enables actuation of a mirror in two dimensions based on piezoelectric excitation.

A further object of the invention is to provide a method of operating an optical deflector that efficiently enables actuation of a mirror in two dimensions based on piezoelectric excitation.

To achieve the foregoing objects, the invention provides an optical deflector, comprising a mirror, a first holder and a second holder, the mirror being pivotally connected to the first holder about a first axis and the first holder being pivotally connected to the second holder about a second axis, wherein the first axis and the second axis being aligned at an angle, in particular perpendicularly to one another, wherein piezoelectric actuators are mechanically coupled to the second holder, wherein upon application of a driving voltage to the piezoelectric actuators two orthogonal resonating oscillation modes are excitable, one of the resonating modes corresponding to a pivoting of the mirror about the first axis and the other one corresponding to a pivoting of the mirror about the second axis.

The invention is based on the idea of providing a control of a mirror by means of piezoelectric excitation in that the mirror can be pivoted in two dimensions in a controlled manner. The mirror can be pivoted about two axes, which are aligned at an angle, in particular orthogonally to each other. For example, a laser beam deflection in two dimensions can thus be implemented with a single mirror. For efficient mirror control with piezoelectric actuators, which move the mirror by oscillation excitation, it is favorable if the excitation is resonant, especially to exploit the mechanical quality factor at resonance.

The piezoelectric actuators are usually mechanically coupled to the second holder. By applying a driving voltage to the piezoelectric actuators, oscillation excitation of a structure of the optical deflector, in particular the second holder, can be achieved. Controlled pivoting of the mirror about the first axis and the second axis can be achieved by exciting two orthogonal resonating oscillation modes by the piezoelectric actuators, one of the resonating modes causing the mirror to pivot about the first axis and the other resonating mode causing the mirror to pivot about the second axis. The pivoting of the mirror about the first axis or second axis usually occurs as an oscillating movement. Usually, the resonating oscillation modes are excited in two dimensions. This enables efficient control of pivoting of the mirror about the first axis and second axis. The resonating oscillation modes usually have a different frequency. The resonating oscillation modes can differ from each other in amplitudes or phase. Usually, the piezoelectric actuators are arranged on or formed as part of the second holder.

A piezoelectric actuator is typically formed with or by a piezoelectric element, which usually has a piezoelectric material arranged between two electrodes, in order to cause a deformation of the piezoelectric element or of a component mechanically coupled to the piezoelectric element, such as the structure of the optical deflector, in particular the second holder, by applying a driving voltage to the electrodes. The piezoelectric material and the electrodes are usually each formed as a layer and arranged on top of each other.

The mirror generally has a mirror surface that is configured to reflect, particularly substantially entirely, a beam of light incident on the mirror surface. The light beam can be a laser light beam. The mirror is usually designed as a micromirror. The mirror usually has an average length between 100 µm and 10000 µm, especially between 500 µm and 8000 µm. Preferably, the longitudinal extension of the mirror is parallel or along the first axis or the second axis. The mirror surface is usually substantially planar in shape. The mirror surface can be curved, in particular concave or convex. In particular, it may be provided that the mirror surface is deformable in a controlled manner, for example by piezoelectric excitation. The mirror usually comprises a mirror plate on which the mirror surface is disposed. The mirror plate can have a thickness between 5 µm and 200 µm, in particular between 10 µm and 100 µm. Typically, the mirror plate is substantially formed with or from a monocrystalline or polycrystalline material, for example silicon. The mirror surface is usually formed by a metal layer. The metal layer is preferably formed essentially with or from platinum, silver, aluminum and/or gold. An average thickness of the mirror surface or metal layer is usually between 20 nm and 1000 nm, in particular between 50 nm and 500 nm. The mirror is usually plate-shaped. The mirror-plate and/or mirror surface can be substantially circular or elliptical in shape.

The mirror and the first holder may be connected by one or more first torsion elements, the first torsion element(s) defining the first axis. One end of the first torsion element may be disposed on the mirror and the other end of the first torsion element may be disposed on the first holder, typically rigidly. Pivoting or oscillation of the mirror about the first axis can be achieved by torsion and/or bending of the first torsion elements. Usually, the mirror and the first holder may be connected by an even number of torsion elements. Advantageously, the mirror and the first holder are connected to each other by two first torsion elements disposed on opposite sides of the mirror, the first torsion elements defining the first axis.

The first holder and the second holder may be connected by one or more second torsion elements, the second torsion element(s) defining the second axis. One end of the second torsion element may be disposed on the first holder and the other end of the second torsion element may be disposed on the second holder, typically rigidly. Pivoting or oscillation of the mirror about the second axis can be achieved by torsion and/or bending of the second torsion elements. Usually, the first holder and the second holder may be connected by an even number of second torsion elements. Advantageously, the first holder and the second holder are connected to each other by two second torsion elements disposed on opposite sides of the mirror, the second torsion elements defining the second axis.

Preferably, the first torsion elements are aligned substantially orthogonal to the second torsion elements. Accordingly, the first axis is then orthogonal to the second axis. Specifically, this allows highest dynamic deformations or optical aberrations of the mirror to be shifted from a center of the mirror to an edge of the mirror. Thus, visible optical aberrations can be reduced. The first torsion element and/or second torsion element can be rod-shaped. An average length and/or width of the first torsion element can be between 10 µm and 500 µm, in particular between 50 µm and 300 µm. Usually, the length of the first torsion element is measured along the first axis and the width in a direction orthogonal to the length. An average length and/or width of the second torsion element can be between 250 µm and 2000 µm, in particular between 500 µm and 1000 µm. Usually, the length of the second torsion element is measured along the second axis and the width in a direction orthogonal to the length. Pivoting or oscillation of the mirror about the first axis or second axis can be achieved by torsion and/or bending of the first or second torsion element. The torsion and/or bending of the torsion elements is usually elastic, especially occurs in the elastic domain of the materials of the torsion elements.

The first holder and/or second holder may each form a holding frame, which circumferentially encloses the mirror at least segmentally, in particular for the most part, preferably entirely. In this way, a robust structure with stable resonating oscillation excitation can be implemented. The holding frame may be shaped without corners, in particular circular or elliptical. Usually, the holding frame is arranged substantially in one plane. Preferably, the holding frames of the first holder and the second holder are arranged in the same plane. The plane is preferably defined by the first and second axes. For example, the first holder may be formed with a first holding frame and/or the second holder may be formed with a second holding frame, preferably the first holding frame circumferentially enclosing the mirror and the second holding frame circumferentially enclosing the first holding frame and the mirror. Preferably, the holding-frame of the first holder and/or the holding frame of the second holder is ring-shaped, in particular with a circular or elliptical form.

The second holder can be pivotally connected to a third holder about a third axis. The third holder preferably forms a support frame which circumferentially encloses the mirror, at least segmentally, preferably entirely. The support frame generally extends circumferentially around the second holder, the first holder and the mirror. The third axis may be aligned at an angle to the first axis. Preferably, the third axis is oriented substantially parallel to the second axis or in particular coincides with it. The support frame may be arranged substantially in a plane, preferably in the same plane as the holding frame of the first holder and/or the holding frame of the second holder. It is advantageous if the second holder and the third holder are connected to each other with one or more third torsion elements, wherein the third torsion element(s) define the third axis. One end of the third torsion element may be disposed on the second holder and the other end of the third torsion element may be disposed on the third holder, typically rigidly. Advantageously, the second holder and the third holder are connected to each other by two third torsion elements arranged on opposite sides of the mirror, the third torsion elements defining the third axis. The third holder can be polygonal in shape, especially rectangular or square.

The third torsion element may be designed analogously to the first or second torsion element. The third torsion element may be rod-shaped. An average length and/or width of the third torsion element can be between 50 µm and 1000 µm, in particular between 100 µm and 500 µm. The length is usually measured along the third axis and the width usually in a direction orthogonal to the length. Pivoting or oscillation of the second holder about the third axis can be achieved by torsion and/or bending of the third torsion element. The torsion and/or bending is usually elastic, especially occurs in the elastic domain of the materials of the torsion elements. The first, second and/or third torsion elements can act as torsion springs around which the structure of the optical deflector, especially the first holder, second holder and/or mirror, can oscillate.

For high robustness, it is favorable if at least one, preferably both, of the ends of the respective torsion element, in particular first torsion element, second torsion element and/or third torsion element, are widened. Usually, the respective end of the torsion element has a diameter that is larger than an average diameter of a shaft connecting the two ends. It is advantageous if the end has a continuously increasing diameter in the end direction. Preferably, in particular the respective first torsion element and/or the respective second torsion element is formed in such a way. Especially, the first torsion elements and second torsion elements each can have at least one end which is widened. In particular, this allows to avoid sharp corners and thus prevent stress concentrations in the structure.

Advantageously, the piezoelectric actuators define excitation areas of the second holder which are deformable by the piezoelectric actuators when a driving voltage is applied thereto. The deformation typically represents, in particular oscillating, bending. Usually, at least one excitation area is defined by each of the piezoelectric actuators. In particular, the excitation area may be the piezoelectric material of a respective piezoelectric actuator and/or a structure of the second holder to which the piezoelectric actuator is mechanically coupled and/or to which the piezoelectric actuator is applied. The excitation area may be defined by the electrodes of the respective piezoelectric actuator, especially if multiple of the piezoelectric actuators are formed with a common piezoelectric layer and segmented electrodes - especially as described hereinafter. In this case, electrodes of different piezoelectric actuators are typically arranged separated from each other on the same side of the common piezoelectric layer. Applying the driving voltage to the piezoelectric actuators can affect torque in the second holder, that creates a mechanical response in the structure of the optical deflector, in particular the torsion elements, the first holder and/or the mirror, exciting the orthogonal resonating oscillation modes.

Excitation areas may be arranged on different sides of the mirror. Typically, multiple excitation areas may be distributed along a circumference around the mirror. The excitation areas usually form excitation surfaces in a top view of the optical deflector. The excitation areas can be strip-shaped, usually with a longitudinal extension along a circumference around the mirror. Top view usually refers to a view orthogonal to the first axis and orthogonal to the second axis, in particular opposite to the mirror surface. This applies in particular when the mirror is in a non-actuated state. In top view of the optical deflector, at least one excitation area may be arranged in each of quadrants defined by the first axis and second axis. Preferably, these are different excitation areas. There can be multiple excitation areas in each of the quadrants. Preferably, in top view of the optical deflector, one of the axes, in particular the second axis, defines a first half-side and second half-side, wherein the excitation areas can be arranged asymmetrically, in particular non-mirror symmetrically, with respect to the axis defining the two half-sides, in particular the second axis. Preferably, on each of the half-sides at least one or more excitations areas are arranged, the excitations areas being formed symmetrically with respect to the other axis, for example the first axis.

Preferably, the first axis and second axis define four quadrants, the quadrants of the first half-side do not have a common excitation area and the two quadrants of the second half-side have a common excitation area. This allows precise mirror control to be achieved. Usually, the axis separating the two quadrants of the first half-side is then not overlapped by an excitation area on the first half-side and the axis separating the two quadrants of the second half-side is overlapped by an excitation area on the second half-side. Preferably, the excitation areas of the two quadrants of the respective half-side are symmetrical, in particular mirror symmetrical, with respect to the axis by which the respective quadrants are separated.

It is usually provided that several of the piezoelectric actuators can be electrically controlled with different driving voltages. For this purpose, several of the piezoelectric actuators can be electrically connected to each other with electrical control lines. Typically, the respective piezoelectric actuator is electrically connected to an electrical control circuit, comprising control lines, to apply the driving voltage to the piezoelectric actuator via the control lines of the electrical control circuit. Driving voltages can differ, for example, in their amplitude, frequency and/or phase. Multiple of the piezoelectric actuators may be electrically connected with the same electrical control circuit or its control lines in order to apply the same driving voltage to them. This way a driving voltage can be transmitted to one or more actuators via the same electrical control circuit. Typically, multiple actuators are electrically connected to different electrical control circuits in order to apply different driving voltages to the actuators.

Usually, the optical deflector has electrical connection ports to apply driving voltages to the optical deflector via the connection ports to drive the piezoelectric actuators. A respective connection port is usually electrically connected to the piezoelectric actuators via one or more electrical control circuits in order to apply the driving voltages to the piezoelectric actuators. Typically, each piezoelectric actuator is associated with one of the control ports. The connection ports are typically located on the third holder. The connection port may have one or more electrical contact surfaces that can be electrically contacted to transmit an electrical driving voltage.

Multiple control groups of piezoelectric actuators may be provided, each control group comprising one or more piezoelectric actuators which are electrically connected to the same electrical control circuit to control the piezoelectric actuators with the same driving voltage. The piezoelectric actuators of a respective control group can be electrically connected to each other in order to electrically control them with the same driving voltage. Preferably, piezoelectric actuators from directly adjacent excitation areas can be electrically controlled with different driving voltages. For this, they can be assigned to different control groups. Usually, each piezoelectric actuator is assigned to one of the control groups.

Preferably, a first set comprising one or more piezoelectric actuators and a second set comprising one or more piezoelectric actuators are provided, wherein one of the resonating oscillation modes is excitable with the first set and the other resonating oscillation mode is excitable with the second set. When the piezoelectric actuators are functionally organized into sets, practical mirror control can be implemented. At least one or more of the piezoelectric actuators can be assigned to the first set or the second set, respectively. Usually, each of the piezoelectric actuators is assigned to one of the sets. The first set and the second set may each have piezoelectric actuators from several control groups. For practicable control, the piezoelectric actuators of the first set may be separately controllable from the piezoelectric actuators of the second set. Preferably, the piezoelectric actuators of the first set and the piezoelectric actuators of the second set each form their own control groups of piezoelectric actuators. For example, the first set can have two control groups and the second set can have two control groups, whereby the control groups can each be controlled separately from one another, usually each with its own electrical control circuit.

In top view excitation areas of piezoelectric actuators assigned to the first set and excitation areas of piezoelectric actuators assigned of the second set can be arranged on different sides of the first axis or preferably the second axis. This allows precise control of a pivoting of the mirror. Preferably, the excitation areas of the first set and the excitation areas of the second set are arranged on different sides of the second axis. The sides may be the first half-side and second half-side. An arrangement of the excitation areas formed with the piezoelectric actuators can thereby be implemented as described, in particular above. Preferably, the excitation areas of the first set are formed asymmetrically, in particular non-mirror symmetrically, with respect to the excitation areas of the second set with respect to the axis separating the two sides. The explanations regarding an arrangement of the excitation areas apply in particular in top view of the optical deflector. The excitation areas of the piezoelectric actuators of the first set and the excitation areas of the piezoelectric actuators of the second set can have a different, in particular asymmetrical, arrangement with respect to each other in relation to the first axis and/or second axis. For example, the excitation areas of the piezoelectric actuators of the first set can have a different surface occupancy on the second holder, in particular the holding frame of the second holder, than the excitation areas of the piezoelectric actuators of the second set. Advantageously, in top view of the optical deflector, one or more excitation areas of the first set may be formed on one half-side and one or more excitation areas of the second set may be formed on the other half-side, the half-sides being separated from each other by the second axis. Preferably, substantially all of the excitation areas of the first set are located on one half-side and all of the excitation areas of the second set are located on the other half-side. The excitation areas may be distributed along a circumferential line of a circumference around the mirror. Preferable, the circumferential line is circular or elliptical in shape. Usually, the circumferential line runs, at least segmentally, in particular predominantly, particularly preferably substantially entirely, along the second holding frame, preferably along a center line of the second holding frame, around the mirror. In top view, the circumferential line thereby usually encloses the mirror and the first holding frame, in particular the first holding frame. Excitation areas of the first set or second set typically refers to the excitation areas of the respective piezoelectric actuators of the first set or second set.

Regarding an arrangement of the excitation areas, it is preferred if, at an arrangement angle defined by an intersection of the first axis and second axis as an angular vertex and with respect to the second axis, a first excitation area is located on the circumferential line in an angular range between 170° and 90°, and a second excitation area is located in an angular range between 90° and 10°, and a third excitation area is located in an angular range between -45° and -135°. The first and second excitation areas then are located on the first half-side and the third excitation area then is located on the second half-side. The respective excitation area, in particular the first excitation area, second excitation area and/or third excitation area, may extend over more than 50%, in particular more than 75%, more preferably more than 90%, particularly preferably substantially entirely, of a section of the circumferential line located in the respective angular range along the section. Preferably, there is also provided a fourth excitation area which is located on the circumferential line in an angular range between 180° and 170° and/or a fifth excitation area which is located on the circumferential line in an angular range between 0° and 10°. Alternatively or cumulatively, a sixth excitation area, which is located on the circumferential line in an angular range between 0° and -45°, and/or a seventh excitation area, which is located on the circumferential line in an angular range between -135° and -180°, may be provided. The excitation areas, in particular the fourth to seventh excitation areas, can each extend along the respective circumferential line section in a manner analogous to that described above for the first to third sections. The aforementioned values for arrangement angles each typically have an uncertainty of ±10°, in particular ±5°, preferably ±2°. Particularly preferably, the respective value can be used as such without taking into account the specified uncertainties. Alternatively, the angular vertex can be defined by a mirror center of the mirror. Alternatively, the arrangement angle can also be related to the first axis in an analogous manner with the specified angular ranges. However, it is preferred if the arrangement angle is related to the second axis.

Preferably, the excitation areas are assigned to the first set and the second set in such a way that excitation areas of the first set are arranged on one half-side and excitation areas of the second set are arranged on the other half-side, the half-sides being separated from each other by the second axis. The first excitation area and second excitation area may be assigned to the first set and the third excitation area may be assigned to the second set. The fourth excitation area and/or the fifth excitation area may be assigned to the first set, as defined above. Alternatively or cumulatively, the sixth excitation area and/or the seventh excitation area may be assigned to the second set, as defined above. The excitation areas of the respective set refer to the excitation areas of the piezoelectric actuators assigned to the respective set.

Directly adjacent excitation areas are usually controlled with different driving voltages. Accordingly, the piezoelectric actuators of directly adjacent excitation areas of the first set and the second set can be electrically connected to different control circuits or belong to different control groups. For example, along the circumferential line the piezoelectric actuators of each second excitation area of a respective set can be electrically connected to each other in order to control the piezoelectric actuators with the same driving voltage. For this purpose, the respective piezoelectric actuators are usually electrically connected to the same electrical control circuits. Accordingly, in the first set the piezoelectric actuators of the first excitation area and fifth excitation area may be electrically connected to each other and the piezoelectric actuators of the second excitation area and fourth excitation area may be electrically connected to each other. In an analogous manner, in the second set, the piezoelectric actuators of the sixth excitation area and seventh excitation area can be electrically connected to each other. For example, four electrical control circuits can be provided, with two electrical control circuits for controlling the piezoelectric actuators of the first set and two electrical control circuits for controlling the piezoelectric actuators of the second set. In this way, the piezoelectric actuators of the first set can be used to excite one of the resonating oscillation modes and thus control a movement, in particular pivoting, of the mirror about the first axis, and piezoelectric actuators of the second set can be used to excite the other resonating oscillation mode and thus control a movement, in particular pivoting, of the mirror about the second axis.

Several of the piezoelectric actuators can have a common piezoelectric layer. Multiple electric electrodes can then be disposed separately from one another on the common piezoelectric layer to form the respective piezoelectric actuator. One of the electrodes of each of the piezoelectric actuators can then be arranged on the common piezoelectric layer, electrically separated from one another to separately control the piezoelectric actuators. For this purpose, first electrodes of different piezoelectric actuators can be arranged at a distance from each other on one of the sides of the piezoelectric layer in order to form a piezoelectric element with a second electrode of the respective piezoelectric actuator arranged on the other side of the piezoelectric layer. Such spaced electrodes on the same side of a common piezoelectric layer are also referred to as segmented electrodes. The first electrodes are usually spaced apart along the common piezoelectric layer. The respective second electrodes of the piezoelectric actuators can also be arranged at a distance from each other or preferably be designed as a common second electrode. Preferably, a majority, in particular all, of the piezoelectric actuators can be formed in that way. The piezoelectric actuators of the first set may be formed with a common piezoelectric layer and/or the piezoelectric actuators of the second set may be formed with a common piezoelectric layer. Preferably, the piezoelectric actuators of the first set and second set have a common piezoelectric layer. An average distance between segmented electrodes or directly adjacent electrodes on the same side of the common piezoelectric layer, also referred to as segmentation distance, can be between 5 µm and 100 µm, in particular between 10 µm and 50 µm, preferably between 20 µm and 30 µm. Preferably, in a direction orthogonal to the first axis and second axis opposite to the mirror surface of the mirror, the first electrodes are arranged in front of the second electrodes. Usually, the respective first electrode is then referred to as the top-electrode and the respective corresponding second electrode as the bottom-electrode.

The holding frame of the first holder, also referred to as the first holding frame, may have an average longitudinal extension between 540 µm and 9000 µm, in particular between 900 µm and 8500 µm. The first holding frame may have an average width extension between 10 µm and 500 µm, in particular between 50 µm and 300 µm. Preferably, the longitudinal extension is parallel to or along one of the axes, preferably the first axis, and in particular the width extension is parallel to or along the other of the axes, preferably the second axis. An average thickness of the first holding frame is typically between 5 µm and 200 µm, in particular between 10 µm and 100 µm. Preferably the first holding frame is elliptical or annular in shape. This reduces dynamic deformation or interaction between the resonating oscillation modes when the mirror is moved. If the first holding frame is elliptical in shape, a major axis of the ellipse can be oriented parallel to one of the axes and a minor axis of the ellipse can be oriented parallel to the other of the axes. Preferably, the major axis is oriented parallel to the first axis and the minor axis is oriented parallel to the second axis. Preferably, the first holder or the first holding frame is formed with or from a monocrystalline or polycrystalline material, such as silicon.

The holding frame of the second holder, also referred to as the second holding frame, may have an average longitudinal extension between 580 µm and 15 mm, in particular between 1 mm and 10 mm. The second holding frame may have an average width extension between 100 µm and 1000 µm, in particular between 400 µm and 800 µm. Preferably, the longitudinal extension is parallel to or along one of the axes, preferably the first axis, and in particular the width extension is parallel to or along the other of the axes, preferably the first axis. An average thickness of the second holding frame is typically between 5 µm and 200 µm, in particular between 10 µm and 100 µm. Preferably the second holding frame is elliptical or annular in shape. This increases actuation efficiency of the mirror by adjusting precisely moment of inertia and/or surface of the second holding frame. If the second holding frame is elliptical in shape, a major axis of the ellipse can be oriented parallel to one of the axes and a minor axis of the ellipse can be oriented parallel to the other of the axes. Preferably, the major axis is oriented parallel to the second axis and the minor axis is oriented parallel to the first axis. Preferably, the second holder or the second holding frame is formed with or from a monocrystalline or polycrystalline material, such as silicon. Typically, the second holder or second holding frame has a base structure, which is preferably formed with or from a monocrystalline or polycrystalline material, for example silicon. The piezoelectric actuators are usually mechanically coupled to the base structure such that when the piezoelectric actuators are excited, the base structure is elastically deformed, typically elastically bent. The piezoelectric actuators may be mechanically connected to or applied to the base structure. The piezoelectric layer of the piezoelectric actuator usually has a thickness between 0.5 µm to 10 µm, in particular between 1 µm and 3 µm.

The third holder or third holding frame is preferably formed with or from a monocrystalline or polycrystalline material, for example silicon. The third holder or third holding frame typically provides a support structure for the second holder, the first holder and the mirror, allowing the mirror to pivot about the first axis and second axis relative to the support structure. The optical deflector, in particular the first holder, second holder and/or third holder respectively, is usually plate-shaped.

The piezoelectric layer is usually formed of piezoelectric material. The piezoelectric material can be formed with or of, for example, lead-zirconate-titanate (PZT) or aluminum-nitride (AIN) or AI(X)N, wherein X is preferably Scandium. The electrodes of the respective piezoelectric actuator are usually formed with or of electrically conductive material, in particular metal or an electrically conductive oxide-material. For example, the electrodes may be formed with or of platinum and/or a platinum alloy, gold and/or a gold-alloy, iridium-oxide, in particular IrO₂, and/or ruthenium oxide, in particular RuO₂. The electrodes of the respective piezoelectric actuator typically form electrode layers between which the piezoelectric layer is disposed, such that a piezoelectric element is formed. An average thickness of the electrode layers is usually between 10 nm and 500 nm, in particular between 50 nm and 300 nm. Preferably, at least one of the electrodes of a respective piezoelectric actuator is formed with or from platinum or a platinum alloy. A thickness of the electrode is then preferably between 50 nm and 500 nm, in particular between 100 nm and 300 nm. Both electrodes of a respective piezoelectric actuator can be formed in this way. It is advantageous if the electrode has a first sublayer, which is formed in the aforementioned manner, and a second sublayer, formed with or from, for example, titanium (Ti) or chromium (Cr), the first sublayer being applied to the second sublayer. The second sublayer may then provide an adhesion layer to increase an adhesion of the electrode to a base structure on which the electrode is deposited. The base structure is typically formed with or by the piezoelectric layer.

At least one of the electrodes of at least one of the piezoelectric actuators may have a substructure that defines an area coverage of the electrical electrode. With the substructure, a capacitive load and a stiffness of the electrode can be implemented in a finely tuned manner. The substructure can be formed by making holes in the electrode layer of the electrode, for example by etching. In this case, the holes usually penetrate the electrode layer so that an area coverage of the electrode is changed by introducing the holes. Depending on a hole density of the holes, a different area coverage can be set. The holes can be introduced in the electrode layer with different sizes, shapes and/or spacing. Preferably, the holes are introduced into the electrode according to a periodic order scheme. For example, the holes may be arranged in the form of columns and rows, with the holes regularly spaced apart. Advantageously, the hole density may vary along a length of the electrode, preferably successively increasing or decreasing. Advantageously, this can be along two orthogonal lengths of the electrode. One or both electrodes of at least one of the piezoelectric actuators, can be formed in such a way, in particular with a different substructure. Several, preferably a majority, in particular preferably all, piezoelectric actuators may have at least one electrode that is formed in this way. Preferably, multiple of the electrodes, in particular of different piezoelectric actuators, have different substructures. Especially, the electrodes can be multiple of the first electrodes, in particular top-electrodes. The substructures can differ in their hole density, in particular size, shape and/or spacing of their holes. The substructure can be formed accordingly in a method of manufacturing an optical deflector.

One or more piezoelectric sensors may be mechanically coupled to the second holder to measure the resonating oscillation modes. This allows a deformation of the optical deflector, in particular the second holder, to be determined. In particular, this allows precise control of the piezoelectric actuators depending on a measurement with the piezoelectric sensors. The piezoelectric sensors can be designed in the same manner as the piezoelectric actuators, with the excitation area usually being referred to as the sensor area. The respective piezoelectric sensor typically has an electrical sensing circuit to measure electrical voltages or charges of the electrodes of the piezoelectric sensors. Several of the piezoelectric sensors may have a common electrical sensor circuit.

In top view of the optical deflector, sensor areas of the piezoelectric sensors can be arranged symmetrically to the first and/or preferably the second axis. Preferably, the sensor areas are arranged on the second holder, in particular its holding frame, in a region in which the second torsion elements connect to the second holder. In top view of the optical deflector, at least one sensor area may be located in each of the quadrants defined by the first axis and second axis.

In top view of the optical deflector, the sensor areas can be distributed along the aforementioned circumferential line. At an arrangement angle defined by an intersection of the first axis and second axis as an angular vertex and with respect to the second axis, a first sensor area on the circumferential line may be located in an angular range between 0° and -10° and a second sensor area may be located on an angular range between 180° and -170°. In this way, one of the resonating oscillation modes can be efficiently measured. Alternatively or cumulatively, at the arrangement angle as defined above, a third sensor area on the circumferential line may be located in an angular range between 0° and 10° and a fourth sensor area may be located on an angular range between 180° and 170°. In this way, the other of the resonating oscillation modes can be efficiently measured. The first and second sensor areas are then located on one of the half-sides and the third and fourth sensor areas are located on the other of the half-sides. The respective sensor area, in particular the first to fourth sensor areas, may each extend over more than 50%, in particular more than 75%, more preferably more than 90%, particularly preferably substantially entirely, of a section of the circumferential line located in the respective angular range along the section. Usually, in the presence of sensor areas, excitation areas provided in the relevant angular ranges are reduced by an area occupied by the sensor areas. For example, the aforementioned fourth, fifth, sixth and/or seventh excitation areas may be reduced, if necessary, according to an area occupied by the sensor areas. For example, the fourth and fifth excitation areas may be replaced by sensor areas. The sixth excitation area can then be located, for example, in an aforementioned angular range between -10° to -45° and/or the seventh excitation can be located in an angular range between -135° and -170°. The aforementioned values for arrangement angles each typically have an uncertainty of ±10°, in particular ±5°, preferably ±2°. Particularly preferably, the respective value can be used as such without taking into account the specified uncertainties.

In a further aspect, the invention comprises a method of operating an optical deflector, wherein upon application of a driving voltage to the piezoelectric actuators, two orthogonal resonating oscillation modes are excited, one of the resonating oscillation modes corresponding to pivoting of the mirror about the first axis and the other resonating oscillation mode corresponding to pivoting of the mirror about the second axis. As described above, this allows efficient control of the mirror in two dimensions.

The two resonating oscillation modes may have resonant frequencies between 10 kHz and 50 kHz, in particular 15 kHz and 30 kHz. This makes it possible to achieve a high level of robustness against external interference. Preferably, a difference between the resonant frequencies of the two resonating oscillation modes is at least 500 Hz. Thus, a high resistance against mutual interference of the excited oscillations is achievable. Advantageously, one of the resonating oscillation modes may have a resonant frequency between 12 kHz and 20 kHz, preferably about 16.7 kHz, and the other resonating oscillation mode may have a resonant frequency between 22 kHz and 30 kHz, preferably about 26.3 kHz.

The driving voltage may, for example, have an AC voltage amplitude from 1 Vpp to 20 Vpp, especially from 1 Vpp to 4 Vpp, wherein Vpp stands for peak-to-peak voltage. The driving voltage can have a DC voltage component on which the AC voltage is superimposed. The DC voltage component may, for example, be from -20 V to 20 V, in particular from -8 V to 8 V.

Usually, the two orthogonal resonating oscillation modes are excited simultaneously. One of the orthogonal resonating oscillation modes can be a torsional mode and the other resonating oscillation mode can be a bending mode.

Usually, several of the piezoelectric actuators are supplied with different, in particular phase-shifted, driving voltages to excite the resonating oscillation modes. As explained above, different driving voltages may be applied to different control groups. The driving voltages can differ in their amplitude, frequency and/or phase. Preferably, different driving voltages are applied to piezoelectric actuators of directly adjacent control areas. Preferably, the driving voltages have a phase shift of 180°. In particular, this applies to piezoelectric actuators of the same half-side. The first set and/or the second set can each have piezoelectric actuators from several control groups, with the piezoelectric actuators from different control groups being supplied with different driving voltages. The first set and second set are usually each assigned their own control groups of piezoelectric actuators.

The driving voltage can have two superimposed voltage frequencies to excite one of the resonating oscillation modes with one of the voltage frequencies and the other resonating oscillation mode with the other voltage frequency. In particular, this can reduce a number of electrical control circuits. In this case, piezoelectric actuators of the first set and piezoelectric actuators of the second set can be applied with the same driving voltage. Thus, the same driving voltage can be applied to a control group of the first set as well as to a control group of the second set. Several driving voltages can be implemented in this way.

It is usually provided that a light beam, preferably a laser beam, is deflected with the mirror. The light beam may be generated with a light source, in particular a laser light source. By moving the mirror in a controlled manner, by moving the mirror with the piezoelectric actuators, the light beam can be deflected in different directions. The resonating oscillation modes can be selected in such a way that a light beam deflected with the mirror, in particular a laser beam, generates a, typically repetitive, Lissajous pattern. The Lissajous pattern can be implemented with a frame-rate between 30 Hz and 120 Hz.

The light beam deflected by the mirror can be used to irradiate points of an object, whereby the light beam is redirected from one point to the next point by pivoting the mirror. The points can be arranged in a grid-like manner and/or following a Lissajous pattern to define pixels of a projected pattern. The light beam may be a laser beam. For example, scanning of an object for distance measurement or image projection can be performed by directing the laser beam from one pixel of the object to the next. The scanning technique can be raster scanning or Lissajous scanning, preferably Lissajous scanning.

Top view usually refers to a view of the optical deflector orthogonal to the first axis and orthogonal to the second axis, in particular in a direction contrary to the mirror surface. This applies in particular when the mirror is in a non-actuated state. The piezoelectric actuators can be used to excite resonating oscillation modes in two dimensions, or orthogonal resonating oscillation modes, in the structure of the optical deflector, particularly the second holder, one of the resonating modes causing the mirror to pivot or oscillate about the first axis and the other resonating mode causing the mirror to pivot or oscillate about the second axis. The resonant frequencies of the two resonating oscillation modes may differ in amplitude, frequency and/or phase. The resonating oscillation modes described in this application generally refer to the two excited orthogonal resonating oscillation modes.

The invention will now be described by way of example with reference to the accompanying drawings, in which:
Fig. 1 shows an optical deflector with piezoelectric actuators arranged on a second holder;
Fig. 2 shows the optical deflector of Fig. 1 in top view;
Fig. 3 shows a further optical deflector in top view with two sets of piezoelectric actuators arranged on a second holder;
Fig. 4 shows a further optical deflector in top view with piezoelectric actuators and piezoelectric sensors arranged on a second holder;
Fig. 5 shows a further optical deflector in top view with piezoelectric actuators and piezoelectric sensors arranged on a second holder;
Fig. 6 shows a graph with measurement results for a pivoting of the mirror around a second axis;
Fig. 7 shows a graph with measurement results for a pivoting of the mirror around a first axis.

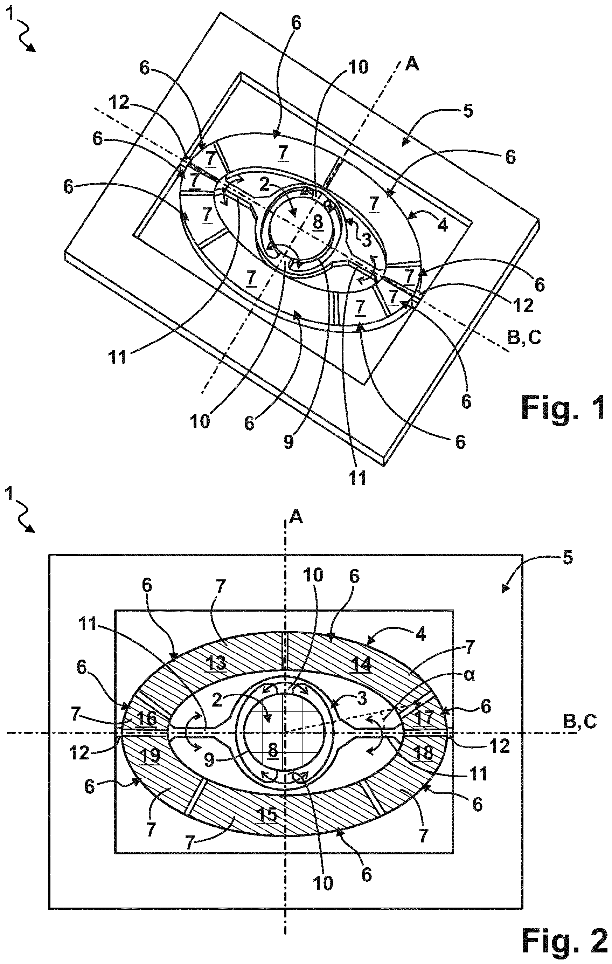

Fig. 1 shows a schematic illustration of an optical deflector 1. The optical deflector 1 comprises a mirror 2, a first holder 3 and a second holder 4. The first holder 3 and the second holder 4 are each formed as a holding frame which extends circumferentially around the mirror 2. The mirror 2 is connected to the first holder 3 by first torsion elements 10, the first torsion elements 10 defining a first axis A about which the mirror 2 is pivotable. Two first torsion elements 10 are arranged on opposite sides of the mirror 2, each connecting the mirror 2 to the first holder 3. The first holder 3 is connected to the second holder 4 by second torsion elements 11, wherein the second torsion elements 11 define a second axis B about which the mirror 2 together with the first holder 3 can be pivoted. Fig. 2 shows the optical deflector 1 in top view orthogonal to the first axis A and orthogonal to the second axis B. The optical deflector 1, in particular the first holder 3, second holder 4 and/or third holder 5, is usually plate-shaped.

The mirror 2 usually has a mirror surface 8 arranged on a mirror plate 9 in order to deflect a light beam, in particular a laser beam, incident on the mirror surface 8 with the mirror surface 8. The mirror plate 9 and/or the mirror surface 8 is usually elliptical or circular.

The second holder 4 is connected by third torsion elements 12 to a third holder 5, which is formed as a support frame, wherein the third torsion elements 12 define a third axis C to enable pivoting of the second holder 4 relative to the third holder 5 about the third axis C. Preferably, angular amplitude of the third torsion element 12 is small and then amplified by the second holder 4. The third axis C preferably corresponds to the second axis B or is oriented parallel to the second axis B. Typically, rotation about the first axis A is accomplished by torsion of the first torsion elements 10, rotation about the second axis B is accomplished by torsion of the second torsion elements 11, and/or rotation about the third axis C is accomplished by torsion of the third torsion elements 12. The respective torsion elements 10, 11, 12 can be rod-shaped. Top view of the optical deflector 1 usually means a view orthogonal to the first axis A and orthogonal to the second axis B. The rotation of the torsion elements 10, 11, 12 may also be achieved by bending them, especially in addition to their torsion.

The respective torsion element 10, 11, 12 is usually connected with its ends to the respective holder 3, 4, 5 or mirror 2. The first torsion elements 10 and second torsion elements 11 may each have at least one widened end. The first torsion elements 10 can be each connected with one of their ends to the mirror 2 and the other end to the first holder 3, wherein one of the ends, preferably, the end abutting the first holder 3 is formed widened. Typically, the second torsion elements 11 are each connected with one of their ends to the first holder 3 and with the other end to the second holder 4, wherein one of the ends, preferably the end abutting the first holder 3, is widened. Preferably, both ends of the respective second torsion element 10, 11, 12 are widened.

The first holder 3 and second holder 4 are preferably elliptically shaped and usually arranged in a common plane. The mirror 2 is preferably circumferentially enclosed by the first holder 3, and the first holder 3 together with the mirror 2 is preferably circumferentially enclosed by the second holder 4. The third holder 5 typically circumferentially encloses the second holder 4 together with the first holder 3 and the mirror 2.

A plurality of piezoelectric actuators 6 are arranged on the second holder 4 to excite two orthogonal resonating oscillation modes such that one of the resonating modes causes the mirror 2 to pivot about the first axis A and the other resonating mode causes the mirror 2 to pivot about the second axis B. The piezoelectric actuators 6 each form an excitation area 7 on the second holder 4, which is deformable, typically bendable, with the piezoelectric actuator 6 by applying suitable driving voltage to the respective piezoelectric actuator 6. In Fig. 2, the excitation areas 7 are hatched.

In top view of the optical deflector 1, the excitation areas 7 are arranged on the second holder 4 distributed along a circumference around the mirror 2. Usually, the excitation areas 7 are strip-shaped. Preferably, the excitation areas 7 are arranged asymmetrically with respect to the second axis B, in particular not mirror-symmetrically, along a circumference around the mirror 2. The excitation areas 7 can be arranged symmetrically, in particular mirror-symmetrically, along the circumference around the mirror 2 with respect to the first axis A.

To excite the resonating oscillation modes, usually different driving voltages are applied electrically to several piezoelectric actuators 6. The respective piezoelectric actuator 6 is designed as a piezoelectric element, with a piezoelectric layer being arranged between two electrodes, typically a bottom-electrode and a top-electrode, in the form of layers. The top-electrode is usually arranged in front of the bottom electrode in a direction orthogonal to the first axis A and second axis B opposite to the mirror surface 8 of the mirror 2. For a compact structure, a plurality of the piezoelectric actuators 6 may have a common piezoelectric layer. One of the electrodes, typically the top-electrodes, may then be formed electrically separated from each other to separately control the piezoelectric actuators 6. The respective other electrodes, usually the bottom-electrodes, may be formed as a common electrode of the piezoelectric actuators 6. Preferably, all of the piezoelectric actuators 6 are designed in this way.

The pivoting of the mirror 2 about the first axis A or second axis B usually is an oscillating movement of the mirror 2 about the respective axis. Thus, oscillation excitation by means of the piezoelectric actuators 6 can control pivoting the mirror 2 in the form of an oscillating movement of the mirror 2 about the first axis A and second axis B respectively.

In an advantageous embodiment, in top view at an arrangement angle α defined by an intersection of the first axis A and second axis B as an angular vertex and with respect to the second axis B, a first excitation area 13 extends on the second holder 4 along a circumference around the mirror 2 in an angular range from (170 ± 10)° to 90°, a second excitation area 14 extends in an angular range from 90° to (10 ± 10)°, and a third excitation area 15 extends in an angular range from (-45 ± 10)° to (-135 ± 10)°. It is further preferred that a fourth excitation area 16 extends in an angular range from 180° to (170 ± 10)°, and/or a fifth excitation area 17 extends in an angular range from 0° to (10 ± 10)°. This is shown in Fig. 2. Alternatively or cumulatively, it is also favorable if a sixth excitation area 18 extends in an angular range from 0° to (-45 ± 10)° and/or a seventh excitation area 19 extends in an angular range from (-135 ± 10)° to -180°. The uncertainties specified for a respective angular value of the angular range define a range of values in which the angular value can basically lie. However, it is preferred if the respective value is used as such without taking the specified uncertainties into account. Alternatively, the angular vertex can be defined by the mirror 2 center of the mirror 2.

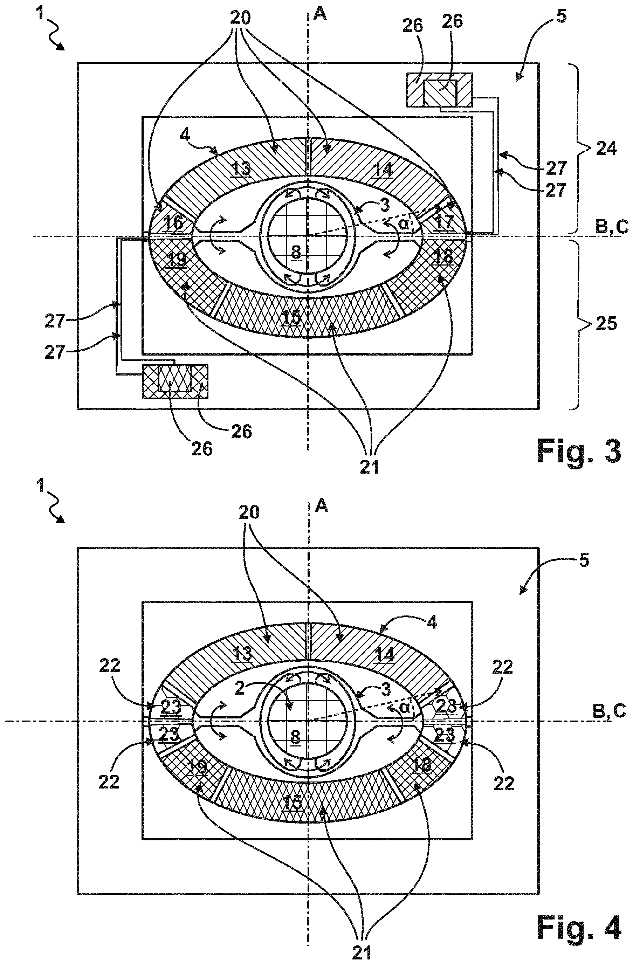

There can be several control groups of piezoelectric actuators 6, each control group comprising one or more piezoelectric actuators 6 which are electrically connected to the same electrical control circuit 27, as shown, for example, in Fig. 3. The piezoelectric actuators 6 can then be electrically controlled with the same driving voltage. Usually, the piezoelectric actuators 6 from directly adjacent excitation areas 7 are electrically controlled with different driving voltages. The driving voltages can, for example, have a phase shift of 180° to each other. This can be implemented by having two control groups, whereby one of the two piezoelectric actuators 6 from directly adjacent excitation areas 7 is assigned to one control group and the other piezoelectric actuator 6 to the other control group.

Fig. 3 shows a schematic illustration of a further optical deflector 1, in particular the optical deflector 1 of Fig. 1 and Fig. 2, in top view. The optical deflector 1 can be implemented according to the features and effects of the optical deflector 1 described for Fig. 1 and Fig. 2 and in an analogous manner vice versa. Provided are a first set 20 and a second set 21, each comprising at least one or more of the piezoelectric actuators 6, the first set 20 being configured to excite one of the resonating oscillation modes and the second set 21 being configured to excite the other resonating oscillation mode. Preferably, in top view of the optical deflector 1, the excitation areas 7 of the piezoelectric actuators 6 of the first set 20 are located on one side and the excitation areas 7 of the piezoelectric actuators 6 of the second set 21 are located on the other side of the second axis B. The sides are also referred to as the first half-side 24 and second half-side 25, respectively.

The excitation areas 7 are arranged as described for Fig. 1 and Fig. 2, whereby, the first excitation area 13 and second excitation area 14 are assigned to the first set 20 and the third excitation area 15 is assigned to the second set 21. Preferably, furthermore the fourth excitation area 16 and/or the fifth excitation area 17 are assigned to the first set 20. Alternatively or cumulatively, the sixth excitation area 18 and/or the seventh excitation area 19 are assigned to the second set 21.

Usually, the piezoelectric actuators 6 of the first set 20 are separately controllable from the piezoelectric actuators 6 of the second set 21. This can be implemented in that the first set 20 has two control groups and the second set 21 has two control groups, whereby the control groups can each be controlled separately from one another, usually each with its own electrical control circuit 27.

The piezoelectric actuators 6 of directly adjacent excitation areas 7 of respectively the first set 20 and the second set 21 may be electrically connected to different control circuits 27, i.e. they belong to different control groups. For example, along a circumference around the mirror 2 on the second holder 4 the piezoelectric actuators 6 of each second arranged excitation area 7 of a respective set 20, 21 can be electrically connected to each other in order to control the piezoelectric actuators 6 with the same driving voltage. This is shown in Fig. 3 by different hatching of the excitation areas 7. Accordingly, in the first set 20, the piezoelectric actuators 6 of the first excitation area 13 and fifth excitation area 17 may be electrically connected to each other, and the piezoelectric actuators 6 of the second excitation area 14 and fourth excitation area 16 may be electrically connected to each other. Similarly, in the second set 21, the piezoelectric actuators 6 of the sixth excitation area 18 and seventh excitation area 19 may be electrically connected to each other. Four electrical control circuits 27 may be present, with two electrical control circuits 27 controlling the piezoelectric actuators 6 of the first set 20 and two electrical control circuits 27 controlling the piezoelectric actuators 6 of the second set 21.

The optical deflector 1 generally has electrical connection ports 26 via which the driving voltages can be applied to the electrical control circuits 27. The connection ports 26 each have one or more electrical contact surfaces for applying the electrical driving voltages. The connection ports 26 can be arranged on the third holder 5, preferably on opposite sides of the mirror 2, as exemplified in Fig. 3.

Fig. 4 shows a schematic illustration of a further optical deflector 1 in top view. The optical deflector 1 can be implemented according to the features and effects of the optical deflector 1 described for Fig. 1, Fig. 2 and/or Fig. 3, and in an analogous manner vice versa. In contrast to the optical deflectors 1 shown in Fig. 1, Fig. 2 and Fig. 3, the optical deflector 1 has piezoelectric sensors 22 arranged on the second holder 4 to measure the resonating oscillation modes. The piezoelectric sensors 22 are formed according to the piezoelectric actuators 6, wherein the excitation area 7 is referred to as the sensor area 23. The respective piezoelectric sensor 22 has an electric sensor circuit to measure electric voltages of the electrodes of the piezoelectric sensor 22. Preferably, the sensor areas 23 are arranged in a region in which the second torsion elements 11 connect to the second holder 4.

For measuring one of the resonating oscillation modes, at the arrangement angle α as defined above, on the second holder 4 a first sensor area 23 is located in an angular range between 0° and (-10 ± 10)° and a second sensor area 23 is located in an angular range between 180° and (-170 ± 10)°. To measure the other resonating oscillation mode, at the arrangement angle α as defined above, on the second holder 4 a third sensor area 23 is located in an angular range between 0° and (10 ± 10)° and a fourth sensor area 23 is located in an angular range between 180° and (170 ± 10)°.

The aforementioned fourth excitation area 16 and fifth excitation area 17 can each be replaced by a sensor area 23, and the aforementioned sixth excitation area 18 and seventh excitation area 19 can be reduced in accordance with an area occupied by the sensor areas 23. Thus, the sixth excitation area 18 may extend in an angular range of -10 to (-45 ± 10)° and/or the seventh excitation area 19 may extend in an angular range of (-135 ± 10)° to (-170 ± 10)°.

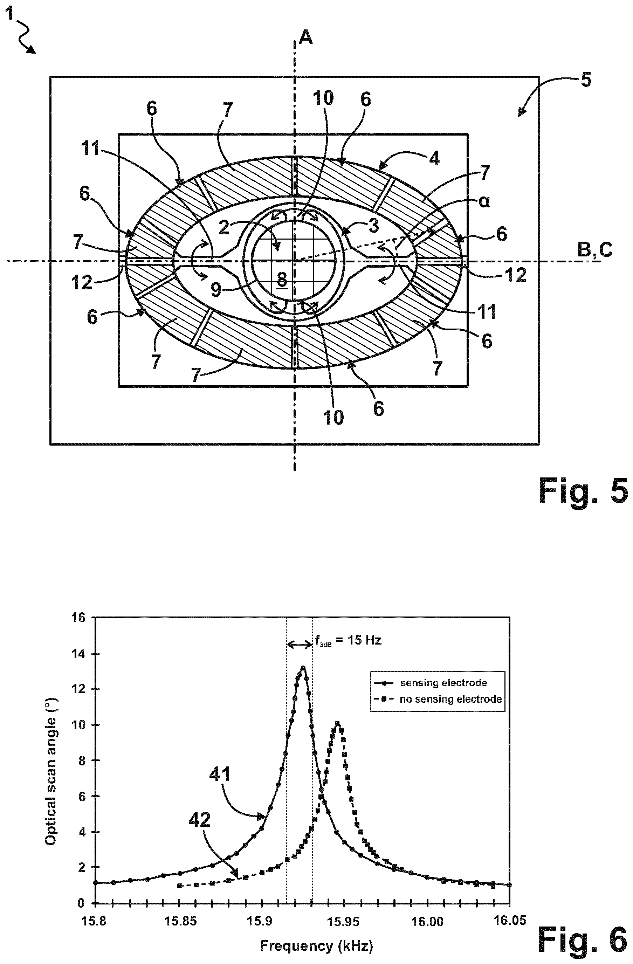

Fig. 5 shows a schematic illustration of a further optical deflector 1 in top view. The optical deflector 1 can be implemented according to the features and effects of the optical deflectors 1 described for Fig. 1 to Fig. 3 and in an analogous manner vice versa. In contrast to the optical deflectors 1 of Figs. 1 to Fig. 3, the excitation areas 7 are arranged symmetrically with respect to the second axis B, in particular mirror-symmetrically, along a circumference around the mirror 2. Thus, the first half side 24 and second half side 25 may have the same arrangement and distribution of excitation areas 7. Further, the excitation areas 7 may be arranged symmetrically, in particular mirror-symmetrically, along the circumference with respect to the first axis A. In this case, the excitation areas 7 can be formed in accordance with a distribution and extension of the excitation areas 7 of the respective first half side 24 or second half side 25 described for Fig. 1 to Fig. 3. In particular, there can be multiple control groups and/or multiple sets as described for Fig. 1 to Fig. 3.

For control, the driving voltage can have two superimposed voltage frequencies to excite one of the resonating oscillation modes with one of the voltage frequencies and the other resonating oscillation mode with the other voltage frequency. This can reduce a number of electrical control circuits 27. The same driving voltage can be applied to all actuators 6 or excitation areas 7. In this case, usually the voltage signals corresponding to the two voltage frequencies have not opposite polarity and the same frequency. The respective excitation area 7 can then be excited according to the two voltage frequencies to cause an oscillation excitation corresponding to the two resonating oscillation modes.

Analogous to Fig. 4, the optical deflector 1 of Fig. 5 can have piezoelectric sensors 22 arranged on the second holder 4 to measure the resonating oscillation modes. The sensors 22 or sensor areas 23 can be implemented as described for Fig. 4.

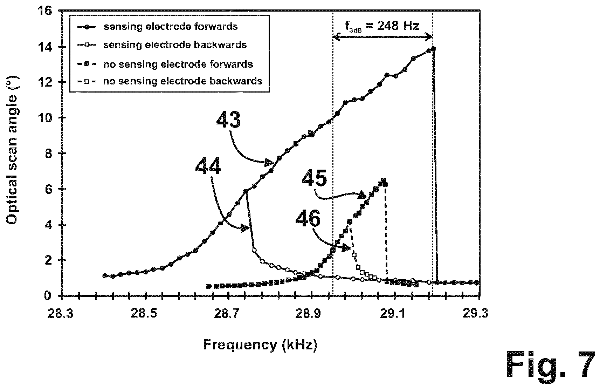

Fig. 6 and Fig. 7 show graphs with measurement results for a pivoting of the mirror 2, where an optical scan angle is shown as a function of the oscillation frequency. Fig. 6 shows measurement results for a pivoting of the mirror 2 around the second axis B and Fig. 7 shows measurement results for a pivoting of the mirror 2 around the first axis A. The measurement results refer to a configuration of the excitation areas 7 according to Fig. 1 to Fig. 4, but can be seen as representative for all arrangements of excitation areas 7 described above according to Fig. 1 to Fig. 5. Fig. 6 shows two curves 41, 42, where a solid curve 41 with circular measuring points represents measurement results of a configuration of the optical deflector 1 with sensors 22 and a dashed curve 42 with square measuring points represents measurement results of a configuration of the optical deflector 1 without sensors 22. It can be seen that when sensors 22 are used, a 3 dB bandwidth of 15 Hz is obtained at an optical scan angle of about 13.5°. Fig. 7 shows two solid curves 43, 44 with circular measuring points, which represent measurement results of the configuration of the optical deflector 1 with sensors 22 in different pivoting directions of the mirror 2 about the first axis A, and two dashed curves 45, 46 with square measuring points, which represent measurement results of a configuration of the optical deflector 1 without sensors 22 in different pivoting directions of the mirror 2 about the first axis A. It can be seen that when sensors 22 are used, a 3 dB bandwidth of 248 Hz is obtained at an optical scan angle of about 14°.

The skilled person can understand that in principle different arrangements and distributions of the excitation areas 7 on the second holder 4 along a circumference around the mirror 2 are possible, although configurations according to Fig. 1 to Fig. 5 are particularly favorable for an efficient control of the mirror 2.

It is thus advantageous if the optical deflector 1 has a mirror 2 which is connected to a first holder 3 so as to be pivotable about a first axis A, and the first holder 3 is connected to a second holder 4 so as to be pivotable about a second axis B, wherein excitation areas 7 of piezoelectric actuators 6 are arranged on the second holder 4 at least sectionally along a circumference around the mirror 2, wherein two orthogonal resonating oscillation modes can be excited with the piezoelectric actuators 6, wherein a pivoting of the mirror 2 about the first axis A can be controlled with one of the resonating oscillation modes and a pivoting of the mirror 2 about the second axis B can be controlled with the other resonating oscillation mode. The piezoelectric actuators 6 of excitation areas 7 arranged on different sides with respect to the second axis B can be assigned to different sets, with piezoelectric actuators 6 of one set exciting one resonating oscillation mode and the piezoelectric actuators 6 of the other set exciting the other resonating oscillation mode. For control purposes, the piezoelectric actuators 6 of the respective sets can be organized in different control groups, with the piezoelectric actuators 6 of each of the control groups being electrically connected to a common electrical control circuit 27. In this way, a robust control of a mirror 2 in two dimensions based on piezoelectric excitation is efficiently enabled.

## Claims

1. Optical deflector (1), comprising a mirror (2), a first holder (3) and a second holder (4), the mirror (2) being pivotally connected to the first holder (3) about a first axis (A) and the first holder (3) being pivotally connected to the second holder (4) about a second axis (B), wherein the first axis (A) and the second axis (B) being aligned at an angle, in particular perpendicularly to one another; **characterized in that** piezoelectric actuators (6) are mechanically coupled to the second holder (4), wherein upon application of a driving voltage to the piezoelectric actuators (6) two orthogonal resonating oscillation modes are excitable, one of the resonating oscillation modes corresponding to a pivoting of the mirror (2) about the first axis (A) and the other one corresponding to a pivoting of the mirror (2) about the second axis (B).

2. Optical deflector (1) according to claim 1, wherein the mirror (2) and the first holder (3) are connected by two first torsion elements (10) disposed on opposite sides of the mirror (2), the first torsion elements (10) defining the first axis (A), and/or the first holder (3) and the second holder (4) are connected by two second torsion elements (11) disposed on opposite sides of the mirror (2), the second torsion elements (11) defining the second axis (B).

3. Optical deflector (1) according to claim 1 or 2, wherein the first holder (3) and/or second holder (4) each form a holding frame, which circumferentially encloses the mirror (2) at least segmentally, in particular for the most part.

4. Optical deflector (1) according to any one of claims 1 to 3, wherein the piezoelectric actuators (6) define excitation areas (7) of the second holder (4) which are deformable by the piezoelectric actuators (6) when a driving voltage is applied thereto.

5. Optical deflector (1) according to any one of claims 1 to 4, wherein in top view one of the axes, in particular the second axis (B), defines a first half-side (24) and second half-side (25), wherein the excitation areas (7) are arranged asymmetrically with respect to the axis defining the two half-sides.

6. Optical deflector (1) according to claim 5, wherein the first axis (A) and second axis (B) define four quadrants, the quadrants of the first half-side (24) do not have a common excitation area (7) and the two quadrants of the second half-side (25) have a common excitation area (7).

7. Optical deflector (1) according to claim 6, wherein multiple control groups of piezoelectric actuators (6) are provided, each control group comprising one or more piezoelectric actuators (6) which are electrically connected to the same electrical control circuit (27) to control the piezoelectric actuators (6) with the same driving voltage.

8. Optical deflector (1) according to any one of claims 1 to 7, wherein a first set (20) comprising one or more piezoelectric actuators (6) and a second set (21) comprising one or more piezoelectric actuators (6) are provided, wherein one of the resonating oscillation modes is excitable with the first set (20) and the other resonating oscillation mode is excitable with the second set (21).

9. Optical deflector (1) according to claims 8, wherein in top view excitation areas (7) of piezoelectric actuators (6) assigned to the first set (20) and excitation areas (7) of piezoelectric actuators (6) assigned to the second set (21) are arranged on different sides of the first axis (A) or preferably the second axis (B).

10. Optical deflector (1) according to any one of claims 1 to 9, wherein at least one of the electrodes of at least one of the piezoelectric actuators (6) has a substructure that defines an area coverage of the electrical electrode, wherein preferably multiple of the electrodes have different substructures.

11. Optical deflector (1) according to any one of claims 1 to 10, wherein one or more of piezoelectric sensors (22) are mechanically coupled to the second holder (4) to measure the resonating oscillation modes.

12. Optical deflector (1) according to claim 11, wherein in top view sensor areas (23) of the piezoelectric sensors (22) are arranged symmetrically to the first and/or second axis (B).

13. Method of operating an optical deflector (1) according to any one of claims 1 to 12, wherein upon application of a driving voltage to the piezoelectric actuators (6), two orthogonal resonating oscillation modes are excited, one of the resonating oscillation modes corresponding to pivoting of the mirror (2) about the first axis (A) and the other one corresponding to pivoting of the mirror (2) about the second axis (B).

14. Method according to claim 13, wherein the driving voltage comprises two superimposed voltage frequencies to excite one of the resonating oscillation modes with one of the voltage frequencies and the other resonating oscillation mode with the other voltage frequency.

15. Method according to claim 13 or 14, wherein multiple of the piezoelectric actuators (6) are supplied with different, in particular phase-shifted, driving voltages to excite the resonating oscillation modes.
